# EUROPÄISCHE PATENTSCHRIFT

(11) **EP 1 814 758 B1**
(45) Veröffentlichungstag und Bekanntmachung des Hinweises auf die Patenterteilung: **31.12.2008**
(21) Anmeldenummer: 05799734.8
(22) Anmeldetag: 29.10.2005
(51) Int. Cl.: B60N 2/36, B60N 2/20, E05B 65/32, E05B 65/20

(54) **SCHLOSS, INSBESONDERE F]R EIN KRAFTFAHRZEUG**
LOCK IN PARTICULAR FOR A MOTOR VEHICLE
SERRURE, EN PARTICULIER POUR UN VEHICULE AUTOMOBILE

(30) Priorität: 27.11.2004 DE 102004057338
(43) Veröffentlichungstag der Anmeldung: 08.08.2007
(73) Patentinhaber: Bayerische MotorenWerke Aktiengesellschaft, 80809 München (DE)
(72) Erfinder: SATTLER, Steffen, 81371 München (DE); GABRYCKI, Jaroslaw, 81735 München (DE)
(86) Internationale Anmeldenummer: PCT/EP2005/011614
(87) Internationale Veröffentlichungsnummer: WO 2006/056292

(56) Entgegenhaltungen:
- DE-A1- 10 061 719
- DE-A1- 10 214 691
- DE-A1- 19 713 753
- DE-C1- 4 444 122
- DE-U1- 9 409 203

## Beschreibung

Die Erfindung betrifft ein Schloss, insbesondere für ein Kraftfahrzeug, mit den im Oberbegriff des Patentanspruches 1 angegebenen Merkmalen.

Ein derartiges Schloss ist in der DE 102 14 691 A1 zur Verriegelung einer Kofferraumhaube vorgesehen. Die Drehfalle des Schlosses ist von einer Feder in ihre Offenlage belastet. Beim Schließen der Kofferraumhaube kommt ein Schließbügel an der Drehfalle zur Anlage und verschwenkt diese gegen die Vorspannkraft der Feder in ihre Schließlage, in der eine Sperrklinke vor eine Raste der Drehfalle verriegelnd einfällt. Damit die Sperrklinke mit einer geringen Auslösekraft von der Drehfalle gelöst werden kann, ist ein schwenkbares oder verschiebbares Mittel vorgesehen, das die Sperrklinke schwenkbar lagert und beim Öffnen des Schlosses die Sperrklinke mit einer geringen Auslösekraft von der Drehfalle löst.

Die DE 94 09 203 U1 weist an einem Fahrzeugsitz ein Schloss mit einer Schlossfalle zur Verriegelung der aufrecht gestellten Rückenlehne des Fahrzeugsitzes auf, die von einem Federelement in ihre Offenlage belastet und in ihrer Schließlage von einer Sperrklinke verriegelt ist. Damit das Schloss und ein Knopf zum Öffnen des Schlosses nach der Montage stets zueinander ausgerichtet sind, weist das Schloss ein Gehäuse auf, das bis zur Oberseite der Rückenlehne verläuft und dort den Knopf verstellbar aufnimmt.

In der DE 197 13 753 A1 ist zur Verriegelung einer klappbaren Rückenlehne eines Kraftfahrzeug-Rücksitzes ein Schloss vorgesehen, das über einen verstellbaren Betätigungsknopf zu entriegeln ist, der über ein Koppelelement mit einem Anzeigemittel kinematisch gekoppelt ist. Beim Verstellen des Betätigungsknopfes in eine das Schloss öffnende Entriegelungslage gelangt das Anzeigemittel in eine sichtbare Position, in der dem Anzeigemittel anzusehen ist, dass die Rückenlehne nicht oder nicht vollständig verriegelt ist. Befindet sich das Anzeigemittel in einer nicht sichtbaren Position, müsste das Schloss verriegelt sein. Bei nicht sichtbarem Anzeigemittel ist jedoch nicht auszuschließen, dass das Schloss nicht verriegelt ist.

Der Erfindung liegt die Aufgabe zu Grunde, ein Schloss mit den Merkmalen im Oberbegriff des Patentanspruches 1 anzugeben, das einfacher ein zuverlässiges Schließen des Schlosses ermöglicht.

Diese Aufgabe ist durch die Merkmale im Patentanspruch 1 gelöst. Vorteilhafte Ausgestaltungen der Erfindung sind den Unteransprüchen entnehmbar.

In ihrer Offenlage ist die Schlossfalle von einem lösbaren Offenlage-Halteteil kraft-und/oder formschlüssig festgehalten. Außerdem ist die Schlossfalle von einem Federelement in ihre Schließlage belastet. Beim Verstellen eines in einer vorgegebenen Lage von dem Schloss fixierbaren Teiles in die vorgegebene Lage, beispielsweise beim Verstellen einer Rückenlehne eines Kraftfahrzeug-Fondsitzes in eine aufrechte Normallage, bewirkt das Schließelement oder ein anderes Bauteil im Zusammenwirken mit der Schlossfalle und/oder mit dem Offenlage-Halteteil, dass die Schlossfalle von dem Offenlage-Halteteil gelöst wird. Durch die Vorspannkraft des Federelements und/oder durch das auf die Schlossfalle einwirkende Schließelement kann sich anschließend die Schlossfalle selbsttätig in ihre Schließlage verstellen, in der die Schlossfalle von dem Schließlage-Halteteil festgehalten ist. Bei einer besonders einfachen Ausführung des Schlosses ist das Schließlage-Halteteil durch das Federelement gebildet, das in der Schließlage eine ausreichende Haltekraft bzw. ein ausreichendes Haltemoment an der Schlossfalle in Richtung der Schließlage bewirkt und dadurch verhindert, dass sich das Schließelement von der Schlossfalle lösen kann. Die Schlossfalle kann eine einfache Drehfalle sein, die beispielsweise einen als Fanghaken ausgebildeten Schenkel aufweist, der bei geschlossenem Schloss das Schließelement hintergreift und dadurch festhält. Die Schließlage der Schlossfalle wird bei einer vorteilhaften Ausgestaltung die Erfindung von einer Anzeigeeinrichtung angezeigt, die besonders einfach von der Schlossfalle angesteuert sein kann. Die Anzeigeeinrichtung kann einen federbelasteten Bolzen aufweisen, der in Abhängigkeit von der Lage der Schlossfalle axial verstellbar ist und in einer sichtbaren Axiallage anzeigt, ob das Schloss geschlossen und damit das Schließelement von der Schlossfalle festgehalten ist.

Ein Ausführungsbeispiel der Erfindung wird anhand einer Zeichnung näher erläutert. Es zeigen
- Fig. 1: eine Draufsicht auf das Schloss, in der sich die Drehfalle in ihrer Offenlage befindet,
- Fig. 2: eine perspektivische Ansicht von der Anzeigeeinrichtung und
- Fig. 3: eine Draufsicht auf die in die Schließlage geschwenkte Drehfalle, nach dem Entfernen der Anzeigeeinrichtung und des Federelements.

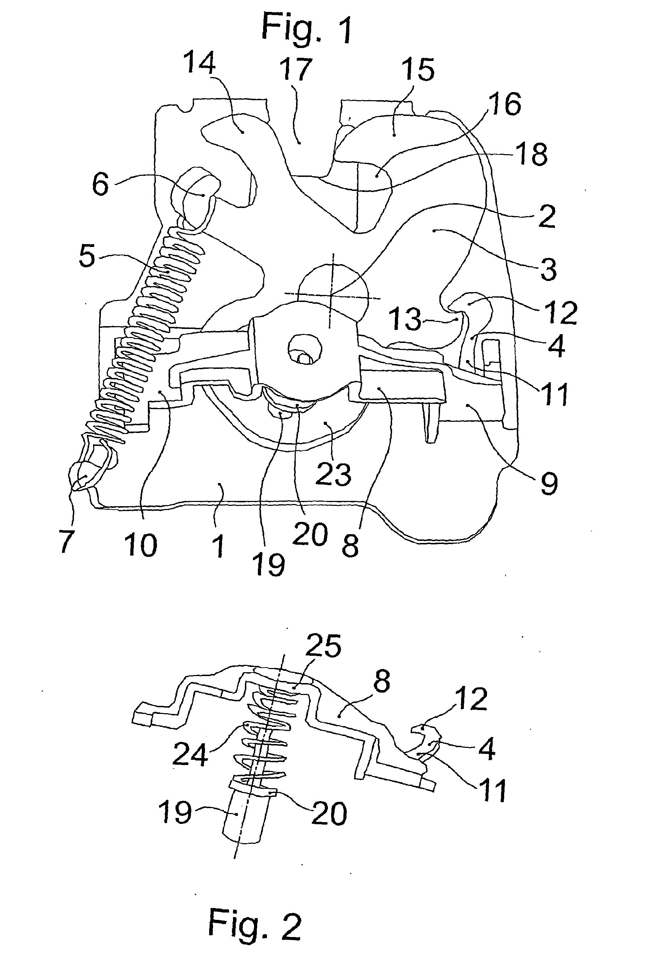

Das in Figur 1 dargestellte Schloss ist jeweils zur Fixierung eines seitlich oberen Bereiches der im Fondraum eines Kraftfahrzeugs angeordneten Rückenlehne eines Fondsitzes gegenüber der Karosserie des Kraftfahrzeugs vorgesehen. Nach der Befestigung der Rückenlehne über die Schlösser im oberen Lehnenbereich kann die Rückenlehne um eine durch die beiden seitlichen Schlösser gebildete Schwenkachse nach unten in eine aufrechte Gebrauchslage geschwenkt werden, in der die Rückenlehne beispielsweise in ihrem mittleren unteren Bereich an ein oder mehreren Stellen mit der Karosserie des Kraftfahrzeugs oder mit einem Sitzteil des Fondsitzes verschraubt wird.

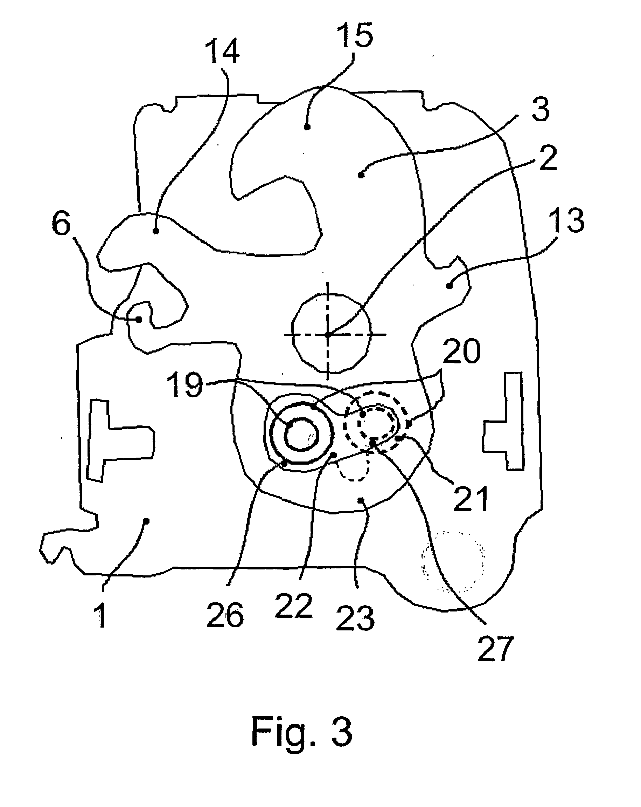

Das Schloss weist eine Schlossplatte 1 auf, die im oberen Seitenbereich der Rückenlehne befestigt ist und um eine Achse 2 schwenkbar eine Drehfalle 3 lagert. In Figur 1 befindet sich die Drehfalle 3 in ihrer Offenlage, in der sie von einem als Sperrklinke 4 ausgebildeten Offenlage-Halteteil festgehalten ist. Die Drehfalle 3 ist von einem als Zugfeder ausgebildeten Federelement 5 im Gegenuhrzeigersinn um die Achse 2 in die in Figur 3 dargestellte Schließlage belastet. Hierzu ist das Federelement 5 mit einem Stirnbereich an einem Hebelarm 6 der Drehfalle 3 und mit dem anderen Stirnbereich an einem Stützarm 7 der Schlossplatte 1 befestigt.

Die Sperrklinke 4 ist aus Kunststoff einstückig mit einem Bügelelement 8 gefertigt, das an seinen Seitenbereichen 9, 10 beispielsweise über Clip- oder Einhängeverbindungen lösbar oder unlösbar mit der Schlossplatte 1 verbunden ist. Die Sperrklinke 4 weist einen mit dem Seitenbereich 9 des Bügelelements 8 verbundenen Basisbereich auf, der über einen elastischen Bereich 11 mit einer Sperrnase 12 verbunden ist. Beim Verschwenken der Drehfalle 3 in ihre in Figur 1 dargestellte Offenlage wird der elastische Bereich 11 der Sperrklinke 4 derart elastisch verformen, dass die Sperrnase 12 der Sperrklinke 4 in der Offenlage der Drehfalle 3 selbsttätig vor eine Raste 13 der Drehfalle 3 einfällt und dadurch eine Rückverlagerung in Richtung der in Figur 3 dargestellten Schließlage verhindert.

Die Drehfalle 3 ist als Gabelfalle mit einem Anlageschenkel 14 und einem als Fanghaken 15 ausgebildeten Schenkel gebildet, wobei zwischen dem Anlageschenkel 14 und dem Fanghaken 15 eine Ausnehmung 16 gebildet ist.

Wird die nicht dargestellte Rückenlehne in ihre aufrechte Normallage geschwenkt, kommt ein seitlich an der Fahrzeugkarosserie angeordneter, nicht dargestellter Schließbolzen oder dergleichen an dem Anlageschenkel 14 zur Anlage und bewirkt an der Drehfalle 3 ein Drehmoment im Gegenuhrzeigersinn um die Achse 2. Wurde die Rückenlehne mit einem ausreichenden Schwung oder mit einer ausreichenden Kraft in die aufrechte Normallage verstellt, löst sich die Sperrnase 12 der Sperrklinke 4 von der Raste 13 der Drehfalle 3. Durch die Spannkraft des Federelements 15 oder zusätzlich durch das weiter auf den Anlageschenkel 14 einwirkende Schließelement verschwenkt die Drehfalle 3 in ihre in Figur 3 dargestellte Schließlage. In der Schließlage ist das Schließelement in die Ausnehmung 16 der Drehfalle 3 eingetreten und von dem Fanghaken 15 derart hintergriffen, dass sich das Schließelement nicht von dem Fanghaken 15 lösen kann. Das nicht dargestellte Schließelement weist eine solche axiale Erstreckung auf, dass es nicht in die Ausnehmung 16 der Schlossfalle 3 eintreten könnte, wenn nicht in der Schlossplatte 1 eine Randausnehmung 17 ausgebildet wäre, die von dem Schließelement durchsetzt wird. Am Boden der Randausnehmung 17 ist ein elastisches Element 18 befestigt, an dem sich das Schließelement in der Schließlage der Drehfalle 3 elastisch abstützt und von dem das Schließelement gegen die Innenseite des Fanghakens 15 belastet ist.

Damit die Schließlage des Fanghakens 3 eindeutig erkannt werden kann, ist eine Anzeigeeinrichtung vorgesehen, die anzeigt, ob und sich die Drehfalle in ihrer Offenlage oder in ihrer Schließlage befindet.

Die Anzeigeeinrichtung ist in Figur 2 separat dargestellt. Sie weist einen Bolzen 19 mit einem radial erweiterten Kopfteil 20 auf, das in der Offenlage der Drehfalle 3 unter der Kraft eines Federteiles 24 an einem Randbereich 21 einer Durchtrittsöffnung 22 anliegt, die in einem Bereich 23 der Drehfalle 3 ausgebildet ist. Der Bolzen 19 ragt dabei in die Durchtrittsöffnung 22 hinein oder durchsetzt die Durchtrittsöffnung 22. Das Federteil 24 stützt sich an seinem von dem Kopfteil 20 abgewandten Stirnbereich am Boden 25 einer Vertiefung im Bügelelement 8 ab und ist einstückig mit dem Bügelelement 8 und dem Bolzen 19 sowie mit seinem Kopfteil 20 aus Kunststoff gefertigt.

An Hand von Figur 3 wird die Funktion der Anzeigeeinrichtung beschrieben. In dem Bereich 23 der Drehfalle 3, der dem Fanghaken 15 etwa radial zur Achse 2 gegenüber liegt ist die Durchtrittsöffnung 22 ausgebildet, die einen gegenüber dem Kopfteil 20 des Bolzens 19 im Durchmesser größeren Erweiterungsbereich 26 und einen gegenüber dem Kopfteil 20 im Durchmesser kleineren Nischenbereich 27 aufweist. Bei in die Offenlage verstellter Drehfalle 3 ist der Bolzen 19 gegen die Kraft des Federteiles 24 in Richtung zum Boden 25 des Bügelelements 8 verstellt. Außerdem liegt das Kopfteil 20 unter der Spannkraft des Federteiles 24 axial an dem den Nischenbereich 27 der Durchtrittsöffnung 22 umgebenden Randbereich an und der Bolzen 19 durchsetzt den Nischenbereich 27 der Durchtrittsöffnung 22. In Figur 3 sind durch unterbrochene Umrisslinien die relative Lage des Bolzens 19 und seines radial erweiterten Kopfteiles 20 dargestellt, wenn sich die Drehfalle 3 in ihrer nicht dargestellten Offenlage befindet und der Bolzen 19 den Nischenbereich 27 der Durchtrittsöffnung 22 durchsetzt.

Wird die Drehfalle 3 im Zusammenwirken mit dem nicht dargestellten Schließelement und/oder durch die Spannkraft des Federelements 5 von der in Figur 1 dargestellten Offenlage in die Schließlage gemäß Figur 3 verstellt, so gelangt der am Bügelelement 8 im wesentlichen axial verstellbare Bolzen 19 mit seinem Kopfteil 20 in den Erweiterungsbereich 26, in dem sich das Kopfteil 20 nicht mehr axial an der Drehfalle 3 abstützen kann. Das Federteil 24 kann sich nun entspannen und drückt den Bolzen 19 mit seinem Kopfteil 20 durch den Erweiterungsbereich 26 hindurch nach außen in eine Anzeigelage. An dem dann vorstehenden Bolzen 19 ist erkennbar, dass sich die Drehfalle 3 in ihrer Schließlage befindet und - nachdem sich die Drehfalle 3 nur im Zusammenwirken mit dem Schließelement in die Schließlage verstellen lässt - das Schließelement sowie die damit verbundene Rückenlehne wie beabsichtigt zuverlässig festhält. Dies ist bei der Montage der Rückenlehne von besonderem Vorteil, da nach einem Verstellen des Bolzens 19 in die sichtbar vorstehende Anzeigelage nicht mehr von einer Arbeitskraft nachzuprüfen ist, ob die Rückenlehne ordnungsgemäß durch das Schloss verriegelt ist.

Das bei dem Ausführungsbeispiel durch ein Federelement gebildete Schließlage-Halteteil kann auch von einem anderen Teil, beispielsweise von einem anderen Federelement oder von einer Sperrklinke gebildet sein, die in der Schließlage verriegelnd vor eine Raste oder Stützschulter an der Schlossfalle einfallen kann. Die Schlossfalle kann wie bei dem Ausführungsbeispiel eine Drehfalle oder eine andere schwenkbare oder auf einer geradlinigen oder gekrümmten Kurvenbahn verstellbare Schlossfalle sein. Die Anzeigeeinrichtung kann auch durch eine andere Anzeigeeinrichtung gebildet sein, die durch die Lage eines Anzeigeelements und/oder durch ein optisches und/oder akustisches Signal beispielsweise die Schließlage der Drehfalle anzeigt. Bei dem Ausführungsbeipiel wird das Schloss bei der Montage der Rückenlehne eines Kraftfahrzeug-Fondsitzes geschlossen und dann nicht mehr, bzw. nur im Reparaturfall geöffnet. In diesem Fall ersetzt das Schloss eine andere Befestigung der Rückenlehne beispielsweise mittels Schrauben. Damit das bei dem Ausführungsbeispiel verwendete Schloss wieder geöffnet werden kann, ist an der Drehfalle ein Hebelarm oder eine Kraftangriffsfläche, über die manuell oder beispielsweise mittels einem Werkzeug die Drehfalle in ihre Offenlage zurückgestellt werden kann, in der die Sperrklinke selbsttätig vor die Raste an der Drehfalle einfällt und die Drehfalle in ihrer Offenlage festhält. Das Schloss kann auch beliebig oft geöffnet und später wieder geschlossen werden.

## Patentansprüche

1. Schloss, insbesondere für ein Kraftfahrzeug, mit einer Schlossfalle, die beim Schließen des Schlosses von einem Schließelement aus einer Offenlage in Richtung einer Schließlage verstellt wird, **dadurch gekennzeichnet, dass** ein Federelement (5) die Schlossfalle (3) in ihre Schließlage belastet und die Schlossfalle (3) in ihrer Offenlage von einem lösbaren Offenlage-Halteteil (4) kraft- und/oder formschlüssig festgehalten ist und beim Schließen des Schlosses das Schließelement oder ein anderes Bauteil das Offenlage-Halteteil (4) von der Schlossfalle (3) löst.

2. Schloss nach Anspruch 1, **dadurch gekennzeichnet, dass** die Schlossfalle eine um eine Schwenkachse (2) schwenkbare Drehfalle (3) mit einem als Fanghaken (15) ausgebildeten Schenkel ist und der Fanghaken (15) in der Schließlage der Drehfalle (3) das Schließelement bereichsweise derart umgreift, dass sich das Schließelement nicht von dem Fanghaken (15) lösen kann.

3. Schloss nach Anspruch 1 oder 2, **dadurch gekennzeichnet, dass** die Schlossfalle (3) in ihrer Schließlage von einem Schließlage-Halteteil (5) festgehalten ist.

4. Schloss nach Anspruch 3, **dadurch gekennzeichnet, dass** das Schließlage-Halteteil von dem Federelement (5) gebildet ist.

5. Schloss nach einem der Ansprüche 1 bis 4, **dadurch gekennzeichnet, dass** das Offenlage-Halteteil eine Sperrklinke (4) mit einer Sperrnase (12) ist, die in der Offenlage elastisch zu der Schlossfalle (3) belastet vor eine Raste (13) an der Schlossfalle (3) eingefallen ist.

6. Schloss nach Anspruch 5, **dadurch gekennzeichnet, dass** die Sperrklinke (4) einen ortsfest angeordneten Basisbereich aufweist, der über einen elastischen Bereich (11) mit der Sperrnase (12) verbunden ist, der bei in der Offenlage befindlicher Schlossfalle (3) von der Schlossfalle (3) derart elastisch verformt ist, dass die Sperrnase (12) der Sperrklinke (4) zu der Schlossfalle (3) belastet ist.

7. Schloss nach einem der Ansprüche 1 bis 6, **dadurch gekennzeichnet, dass** das Schloss eine Anzeigeeinrichtung aufweist, die anzeigt, ob sich die Schlossfalle (3) in ihrer Offenlage oder in ihrer Schließlage befindet.

8. Schloss nach Anspruch 7, **dadurch gekennzeichnet, dass** die Anzeigeeinrichtung einen Bolzen (19) mit einem radial erweiterten Kopfteil (20) aufweist, das in der Offenlage der Schlossfalle (3) an einem Randbereich einer Durchtrittsöffnung (22) in oder an einem Bereich der Schlossfalle (3) anliegt und von einem Federteil (24) gegen diesen Bereich belastet ist, wobei der Bolzen (19) in die Durchtrittsöffnung (22) ragt oder die Durchtrittsöffnung (22) durchsetzt.

9. Schloss nach Anspruch 8, **dadurch gekennzeichnet, dass** die Durchtrittsöffnung (22) einen gegenüber dem Kopfteil (20) des Bolzens (19) im Durchmesser größeren Erweiterungsbereich (26) aufweist, der bei in die Schließlage verstellter Schlossfalle (3) dem Kopfteil (20) gegenüber liegt, so dass das Kopfteil (20) von dem Federteil (24) in den Erweiterungsbereich (26) hinein oder durch den Erweiterungsbereich (26) hindurch verstellbar ist und sich dann der Bolzen (19) der Anzeigeeinrichtung in einer Anzeigelage befindet, in der dem Bolzen (19) anzusehen ist, ob sich die Schlossfalle (3) in ihrer Schließlage oder nicht in ihrer Schließlage befindet.

10. Schloss nach einem der Ansprüche 1 bis 9, **dadurch gekennzeichnet, dass** die Schlossfalle (3) an einer Schlossplatte (1) oder an einem Wandbereich schwenkbar befestigt ist.

11. Schloss nach einem der Ansprüche 8 bis 10, **dadurch gekennzeichnet, dass** sich das Federteil (24) mit einem Stirnbereich an dem Kopfteil (20) und mit seinem anderen Stirnbereich an einem Bügelelement (8) abstützt, das mit einem Wandbereich oder gegebenenfalls mit der Schlossplatte (1) fest oder lösbar verbunden oder zu verbinden ist.

12. Schloss nach Anspruch 11, **dadurch gekennzeichnet, dass** das Bügelelement (8) und/oder das Federteil (24) und/oder der Bolzen (19) mit Kopfteil (20) und/oder das Offenlage-Halteteil (4) einstückig aus einem Kunststoff gefertigt sind.

13. Schloss nach einem der Ansprüche 10 bis 12, **dadurch gekennzeichnet, dass** in der Schlossplatte 1 eine Randausnehmung 17 ausgebildet ist, die beim Schließen des Schlosses von dem Schließelement durchsetzt wird und am Boden der Randausnehmung 17 ein elastisches Element 18 befestigt ist, an dem sich das Schließelement in der Schließlage der Drehfalle 3 elastisch abstützt und von dem das Schließelement gegen die Innenseite des Fanghakens 15 belastet ist.

## Claims

1. A lock, especially for a motor vehicle, comprising a lock latch, which, on closing the lock, is adjusted by a closing element from an open position in the direction of a closing position, **characterised in that** a spring element (5) loads the lock latch (3) into its closing position and the lock latch (3) is non-positively and/or positively held in its open position by a releasable open position holding part (4), and on closing the lock, the closing element or another component releases the open position holding part (4) from the lock latch (3).

2. A lock according to claim 1, **characterised in that** the lock latch is a rotary latch (3) which can be pivoted about a pivot axis (2), comprising a leg configured as a catch hook (15) and the catch hook (15) in the closing position of the rotary latch (3), encompasses the closing element in regions in such a way that the closing element cannot be released from the catch hook (15).

3. A lock according to claim 1 or 2, **characterised in that** the lock latch (3) is held in its closing position by a closing position holding part (5).

4. A lock according to claim 3, **characterised in that** the closing position holding part is formed by the spring element (5).

5. A lock according to any one of claims 1 to 4, **characterised in that** the open position holding part is a pawl (4) with a locking lug (12), which, in the open position, loaded elastically with respect to the lock latch (3), has locked in front of a notch (13) on the lock latch (3).

6. A lock according to claim 5, **characterised in that** the pawl (4) has a stationarily arranged base region, which is connected by means of an elastic region (11) to the locking lug (12), which, when the lock latch (3) is located in the open position, is deformed elastically by the lock latch (3) in such a way that the locking lug (12) of the pawl (4) is loaded with respect to the lock latch (3).

7. A lock according to any one of claims 1 to 6, **characterised in that** the lock has a display device, which displays whether the lock latch (3) is in its open position or its closed position.

8. A lock according to claim 7, **characterised in that** the display device has a bolt (19) with a radially expanded head part (20), which, in the open position of the lock latch (3), rests on an edge region of a through-opening (22) or in or on a region of the lock latch (3) and is loaded by a spring part (24) against this region, the bolt (19) projecting into the through-opening (22) or penetrating the through-opening (22).

9. A lock according to claim 8, **characterised in that** the through-opening (22), has an expansion region (26) which is larger than the head part (20) of the bolt (19) in diameter, which expansion region, when the lock latch (3) is adjusted into the closing position, opposes the head part (20), so the head part (20) can be adjusted by the spring part (24) into the expansion region (26) or through the expansion region (26) and the bolt (19) of the display device is then located in a display position, in which it can be seen from the bolt (19) whether the lock latch (3) is located in its closing position or not located in its closing position.

10. A lock according to any one of claims 1 to 9, **characterised in that** the lock latch (3) is pivotably fastened on a lock plate (1) or on a wall region.

11. A lock according to any one of claims 8 to 10, **characterised in that** the spring part (24) is supported by an end region on the head part (20) and by its other end region on a bow element (8), which is rigidly or releasably connected, or to be connected, to a wall region or optionally to the lock plate (1).

12. A lock according to claim 11, **characterised in that** the bow element (8) and/or the spring part (24) and/or the bolt (19) with head part (20) and/or the open position holding part (4) are manufactured in one piece from a plastics material.

13. A lock according to any one of claims 10 to 12, **characterised in that** configured in the lock plate (1) is an edge recess (17), which is penetrated by the closing element when the lock is closed and an elastic element (18) is fastened to the base of the edge recess (17), on which elastic element the closing element is supported elastically in the closing position of the rotary latch (3) and by which the closing element is loaded against the inside of the catch hook (15).

## Revendications

1. Serrure notamment pour un véhicule automobile comportant un pêne qui, à la fermeture de la serrure, est déplacé par un élément de fermeture, d'une position d'ouverture en direction d'une position de fermeture,
**caractérisée en ce qu'**
un élément de ressort (5) sollicite le pêne (3) en position de fermeture et le pêne (3) est retenu en position d'ouverture par une pièce de maintien de position d'ouverture (4), déverrouillable, en étant retenu par une liaison par la force et/ ou par la forme et, à la fermeture de la serrure, l'élément de fermeture ou une autre pièce, libère la pièce de maintien en position d'ouverture (4) par rapport au pêne (3).

2. Serrure selon la revendication 1,
**caractérisée en ce que**
le pêne est un pêne tournant (3) pivotant autour d'un axe de pivotement (2) et ayant une branche réalisée en forme de crochet (15), le crochet (15) entourant par zone, l'élément de fermeture en position de fermeture du pêne tournant (3) de façon que l'élément de fermeture ne puisse se détacher du crochet (15).

3. Serrure selon la revendication 1 ou 2,
**caractérisée en ce que**
le pêne (3) est retenu fermement dans sa position de fermeture par une pièce de fîxation de position de fermeture (5).

4. Serrure selon la revendication 3,
**caractérisée en ce que**
la pièce de fîxation de position de fermeture est constituée par l'élément de ressort (5).

5. Serrure selon l'une des revendications 1 à 4,
**caractérisée en ce que**
la pièce de maintien en position d'ouverture est un verrou (4) avec un bec de verrouillage (12) sollicité élastiquement vers le pêne (3) en position d'ouverture en venant dans une encoche (13) du pêne (3).

6. Serrure selon la revendication 5,
**caractérisée en ce que**
le verrou (4) comporte une zone de base fixe reliée au bec de blocage (12) par l'intermédiaire d'une zone élastique (11), et lorsque le pêne (3) est en position d'ouverture, il déforme élastiquement le bec de blocage (12) de façon que celui-ci sollicite le verrou (4) en direction du pêne (3).

7. Serrure selon l'une des revendications 1 à 6,
**caractérisée en ce que**
la serrure comporte un dispositif d'affichage indiquant si le pêne (3) se trouve en position d'ouverture ou en position de fermeture.

8. Serrure selon la revendication 7,
**caractérisée en ce que**
le dispositif d'affichage comporte un goujon (19) muni d'une partie de tête (20) élargie radialement, et qui, en position d'ouverture du pêne (3), s'applique contre une zone de bord d'un orifice traversant (22) dans ou sur une zone du pêne (3) et est sollicité contre cette zone par un élément de ressort (24), le goujon (19) pénétrant ou passant dans l'orifice traversant (22).

9. Serrure selon la revendication 8,
**caractérisée en ce que**
l'orifice traversant (22) a une zone élargie (26) plus grande que le diamètre de la partie de tête (20) du goujon (19), et lorsque le pêne (3) est déplacé en position de fermeture, cette zone élargie (26) est en regard de la partie de tête (20), ce qui permet à la partie de tête (20) d'être déplacée par la partie de ressort (24) dans ou à travers la zone élargie (26), et qu'ensuite le goujon (19) du dispositif d'affichage se trouve en position d'affichage dans laquelle il apparaît, indiquant si le pêne (3) est en position de fermeture ou n'est pas en position de fermeture.

10. Serrure selon l'une des revendications 1 à 9,
**caractérisée en ce que**
le pêne (3) est fixé de manière pivotante à une platine de serrure (1) ou une zone de paroi.

11. Serrure selon l'une des revendications 8 à 10,
**caractérisée en ce que**
la partie de ressort (24) s'appuie par sa zone frontale contre la partie de tête (20) ou par une autre zone frontale contre un élément en forme de cavalier (8) relié solidairement ou de façon amovible à une zone de paroi ou, le cas échéant, à la platine (1) ou est destiné à être relié.

12. Serrure selon la revendication 11,
**caractérisée en ce que**
l'élément en forme de cavalier (8) et/ ou l'élément de ressort (24) et/ ou le goujon (19) et la partie de tête (20) et/ou la partie de maintien en position ouverte (4) sont réalisés en une seule pièce en matière plastique.

13. Serrure selon l'une des revendications 10 à 12,
**caractérisée en ce que**
le bord de la platine de serrure (1) comporte une découpe(17) qui, à la fermeture de la serrure, est traversée par l'élément de fermeture et un élément élastique (18) est fixé au bord de la découpe (17), l'élément de fermeture s'appuyant élastiquement contre cet élément élastique en position de fermeture du pêne tournant (3) et l'élément de fermeture sollicite cet élément élastique contre le côté intérieur du crochet (15).
